# EUROPÄISCHE PATENTSCHRIFT

(11) **EP 1 727 851 B1**
(45) Veröffentlichungstag und Bekanntmachung des Hinweises auf die Patenterteilung: **30.07.2008**
(21) Anmeldenummer: 05716153.1
(22) Anmeldetag: 17.03.2005
(51) Int. Cl.: C08G 65/26

(54) **VERFAHREN ZUR HERSTELLUNG VON POLYETHERALKOHOLEN ZUR POLYURETHANSYNTHESE**
METHOD FOR THE PRODUCTION OF POLYETHER ALCOHOLS FOR POLYURETHANE SYNTHESIS
PROCEDE DE PRODUCTION D'ALCOOLS DE POLYETHER POUR LA SYNTHESE DE POLYURETHANNES

(30) Priorität: 18.03.2004 DE 102004013408
(43) Veröffentlichungstag der Anmeldung: 06.12.2006
(73) Patentinhaber: BASF SE, 67056 Ludwigshafen (DE)
(72) Erfinder: RUPPEL, Raimund, 01099 Dresden (DE); BAUM, Eva, 01987 Schwarzheide (DE); OSTROWSKI, Thomas, 68199 Mannheim (DE); HARRE, Kathrin, 01109 Dresden (DE); BLEUEL, Elke, 01127 Dresden (DE)
(74) Vertreter: Isenbruck, Günter
(86) Internationale Anmeldenummer: PCT/EP2005/002848
(87) Internationale Veröffentlichungsnummer: WO 2005/090440

(56) Entgegenhaltungen:
- EP-A- 0 705 872
- EP-A- 0 759 450
- WO-A-20/04106408

## Beschreibung

Die vorliegende Erfindung betrifft ein Verfahren zur Herstellung von hochwertigen Polyetheralkoholen mittels DMC-Katalyse, geeignet für die Polyurethansynthese, sowie die Herstellung von Polyurethanen aus den vorgenannten Polyetheralkoholen.

Polyetheralkohole sind wichtige Rohstoffe für die Herstellung von Polyurethanen und Polyurethanschaumstoffen. Polyetheralkohole werden zumeist durch katalytische Anlagerung von Alkylenoxiden an OH-funktionelle Verbindungen hergestellt. Als Katalysatoren werden in der Technik vor allem Alkalihydroxide oder Doppelmetallcyanidkatalysatoren (DMC-Katalysatoren) verwendet. Die Verwendung von DMC-Kalysatoren hat den Vorteil, dass die Anlagerung von Alkylenoxiden mit einer höheren Reaktionsgeschwindigkeit abläuft und die Bildung von unerwünschten Nebenprodukten, im Vergleich zur Alkalimetallhydroxidkatalyse, vermindert wird. Verfahren zur Polyetheralkoholsynthese mittels DMC-Katalyse sind bekannt und werden zum Beispiel in EP-B1-0862947, DD 203735 oder WO 99/51661 beschrieben. Ein Nachteil der Verwendung von DMC-Katalysatoren besteht zum einen in der hohen Empfindlichkeit des DMC-Katalysators und zum anderen in dem schwierigen Anspringverhalten der Startreaktion, was sich in einer langen Anspringzeit ausdrückt. Wegen der Empfindlichkeit der DMC-Katalysatoren kann es häufig zu einer Aktivitätsminderung der Katalysatoren und damit zu einer teilweisen oder gar vollständigen Verhinderung der Umsetzung der Alkylenoxide kommen. Die herabgesetzte Aktivität der Katalysatoren kann nicht nur zu unökonomischer Prozessführung, sondern auch zu sicherheitstechnisch bedenklichen Zuständen im Alkoxylierungsreaktor führen. Weiterhin muß die Katalysatormenge und/oder die Reaktionstemperatur erhöht werden, um den Abfall der Aktivität zu kompensieren. Während geringe Mengen an Katalysator je nach Weiterverwendung der Polyetheralkohole im Produkt verbleiben können, müssen bei einer Reaktionsführung mit erhöhter Katalysatormenge aufwendige Reinigungsschritte zur Entfernung der Katalysatorbestandteile durchgeführt werden. Außerdem können durch die reduzierte Katalysatoraktivität Polyetheralkohole geringerer Qualität, d.h. mit einer relativ hohen Anzahl an Verunreinigungen / Nebenprodukten, insbesondere niedermolekulare Verbindungen, gebildet werden, die gar nicht oder nur sehr aufwendig abtrennbar sind. Die Weiterverarbeitung solcher Polyetheralkohole zu Polyurethanen bzw. Weich- oder Hartschaumstoffen führt folglich ebenfalls zu Produkten geringerer Qualität, was sich, zum Beispiel, durch Ausgasung der in den Polyetheralkoholen enthaltenen Nebenprodukte, insbesondere niedermolekularer Verbindungen (zum Beispiel Formaldehyd), ausdrücken kann.

Es besteht deshalb Bedarf für ein Verfahren zur Herstellung von Polyetheralkoholen mittels DMC-Katalyse, in dem ein Abfall der Katalysatoraktivität verhindert oder zumindest verringert wird. Ferner besteht Bedarf für ein Verfahren zur Herstellung von Polyetheralkoholen mittels DMC-Katalyse, welches eine geringe Anspringzeit aufweist. Außerdem besteht Bedarf für ein DMC-katalysiertes Verfahren zur Herstellung hochwertiger Polyetheralkohole, in dem nur eine geringe Katalysatormenge erforderlich ist, so dass Aufarbeitungsschritte zur Abtrennung des Katalysators entfallen können. Ebenso besteht ein Bedarf an hochwertigen Polyetheralkoholen, die insbesondere geeignet sind für die Herstellung von Polyurethanen, vorzugsweise Hart- und/oder Weichschaumstoffen und die eine nur geringe Anzahl an Verunreinigungen, insbesondere niedermolekulare Verbindungen aufweisen.

In EP-B1-0 090 444 wird beschrieben, dass die Lagerstabilität von mittels DMC-Katalyse hergestellten Polyetheralkoholen durch Zugabe von konventionellen Antioxidantien zu den hergestellten Polyetheralkoholen erhöht werden kann. Eine Vielzahl derartiger Verbindungen werden in der EP-B1-0 090 444 und in den dort zitierten Druckschriften genannt. Überraschenderweise wurde nun gefunden, dass die Zugabe von bestimmten Stabilisatorverbindungen bereits vor und/oder während der Durchführung des DMC-katalysierten Polymerisationsschritts einen Aktivitätsabfall des Katalysators verringern oder gar verhindern kann und/oder die Anspringzeit der Reaktion erheblich reduzieren kann. Dadurch wird die Herstellung hochwertiger Polyetheralkohole möglich.

Gegenstand der Erfindung ist deshalb ein Verfahren zur Herstellung von Polyetheralkoholen durch Reaktion von gesättigten Alkylenoxiden mit mindestens einer gesättigten OH-Verbindung oder einem bereits mit der gesättigten OH-Verbindung oligo- oder polymerisierten Alkylenoxid im Beisein eines Doppelmetallcyanid(DMC)-Katalysators. Das erfindungsgemäße Verfahren ist dann dadurch gekennzeichnet, dass ein Antioxidationsmittel vor der Reaktion zugegeben wird, wobei mehr Antioxidationsmittel als DMC Katalysator (bezogen auf die Masse an eingesetztem DMC-Katalysator) verwendet wird, wobei das Antioxidationsmittel unmittelbar vor der Zugabe von Alkylenoxid zugegeben wird.

So herstellbare Polyetheralkohole weisen eine Hydroxylzahl von bevorzugt 30 bis 300 mg KOH/g, eine DMC-Katalysatorkonzentration von bevorzugt 10 bis 1000 ppm und ein Antioxidationsmittel, in mindestens der 1,5-fachen Menge bezogen auf die Masse des DMC-Katalysators, auf.

Ebenso ist ein Verfahren zur Herstellung von Polyurethanen Gegenstand der Erfindung, welches die folgenden Schritte aufweist:
A) Herstellung von Polyetheralkoholen nach dem vorstehenden Verfahren,
B) Umsetzung der Polyetheralkohole aus Schritt A) mit Isocyanaten und/oder Polyisocyanaten zu Polyurethanen

Im Rahmen der vorliegenden Erfindung werden unter Polyetheralkoholen Verbindungen verstanden, die mehr als eine Etherfunktionalität und mindestens eine Alkoholfunktionalität aufweisen. Vorzugsweise sind die durch das erfindungsgemäße Verfahren hergestellten Polyetheralkohole zur Herstellung von Polyurethanen geeignet. Die Polyetheralkohole können in der Reaktion von Alkylenoxiden mit OH-funktionalisierten Verbindungen (d.h. gesättigte OH-Verbindungen oder bereits mit der gesättigten OH-Verbindung oligo- oder polymerisierten Alkylenoxiden) hergestellt werden. Die Polyetheralkohole besitzen vorzugsweise eine durchschnittliche OH-Funktionalität von 1 bis 8, weiter bevorzugt von 1,5 bis 6,5, besonders bevorzugt von 2 bis 6. Des Weiteren weisen die Polyetheralkohole vorzugsweise eine Hydroxylzahl von 10 bis 350 mg KOH/g, weiter bevorzugt von 30 bis 300 mg KOH/g auf. Die Ermittlung der Hydroxylzahl erfolgt nach Standardmethoden (siehe Römpp, Lexikon der Chemie, Band 3, 10. Auflage, Seite 1852, Thieme Verlag 1997). Die Polyetheralkohole besitzen vorzugsweise eine Viskosität, ermittelt nach DIN 53015 bei 25°C, von 50 bis 5000 mPas.

Die OH-funktionalisierten Verbindungen im Rahmen der Erfindung sind gesättigte Alkohole; vorzugsweise sind die geeigneten OH-funktionalisierten Verbindungen ein-, zwei- oder mehrwertige, aliphatische, aromatische, lineare, cyclische, geradkettige und/oder verzweigte, gesättigte Alkohole, beispielsweise Ethanol, Propanol, Zuckeralkohole oder Zucker wie beispielsweise hydrolysierte Stärke und Glukosesirup. Ebenfalls geeignet sind gesättigte Hydroxy-Verbindungen, die weitere Funktionalitäten enthalten, wie zum Beispiel Hydroxycarbonsäuren, Hydroxyaldehyde, Hydroxyketone, oder Aminoalkohole, wobei jedoch die weitere Funktionalität für die DMC-Katalyse geeignet ist. Vorzugsweise ist die weitere Funktionalität sterisch gehindert. Sterisch gehindert heißt in diesem Zusammenhang, dass zumindest eine, vorzugsweise beide Nachbarpositionen der Funktionalität mit Alkyl- und/oder Arylgruppen substituiert sind. Ein Alkylsubstituent kann vorzugsweise 1 bis 16 C-Atome aufweisen, kann gesättigt, linear oder cyclisch, verzweigt oder unverzweigt sein.
Typischerweise werden im Rahmen dieser Erfindung Alkohole mit 2 bis 8 Hydroxylgruppen, vorzugsweise aliphatische und cycloaliphatische Alkohole mit 2 bis 8 Kohlenstoffatomen in der verzweigten oder unverzweigten Alkylkette oder im cycloaliphatischen Gerüst eingesetzt. Im Rahmen der Erfindung besonders bevorzugt sind mehrfunktionelle Alkohole, ausgewählt aus der Gruppe enthaltend Glycerin, Trimethylolpropan, Pentaerythrit, Di- und Tripentaerythrit, Sorbit, Saccharose, Ethylenglykol und seine Homologen wie z.B. Diethylenglykol, Propylenglykol und seine Homologen, wie z.B. Dipropylenglykol, 1,3-Propandiol, 1,2-, 1,3-, 2,3- und 1,4-Butandiol, sowie Pentan- und Hexandiole, wie z.B. 1,5- Pentandiol und 1,6- Hexandiol.
Geeignet sind sowohl niedermolekulare (d.h. 1 bis 8 Kohlenstoffatome aufweisende) Alkohole als auch höhermolekulare Alkohole. Ebenfalls geeignete OH-Verbindungen im Rahmen der Erfindung sind bereits mit einer oder mehr OH-Verbindungen oligomerisierte oder polymerisierte Alkylenoxide. Derartige oligomerisierte oder polymerisierte OH-Verbindungen können auch bereits separat mit anderen Katalysatoren als DMC-Katalysatoren hergestellt worden sein. Die OH-Verbindungen können, einzeln oder als Gemisch, mit Alkylenoxiden, Alkylenoxidgemischen zusammen, nacheinander, in blockweiser Form oder in statistischer Anlagerung im Beisein des DMC-Katalysators umgesetzt werden.

Zusammen mit den OH-Verbindungen können auch H-funktionelle Verbindungen eingesetzt werden. H-funktionelle Verbindungen sind Verbindungen, die mindestens eine H-funktionelle Gruppe aufweisen, und die mit Alkylenoxiden oder Polyalkylenoxiden unter DMC-Katalyse reagieren, ohne den Katalysator zu inaktivieren, und die vorzugsweise gesättigt sind.

Prinzipiell können alle für die DMC-Katalyse geeigneten, gesättigten Alkylenoxide eingesetzt werden. Geeignete Alkylenoxide sind beispielsweise Ethylenoxid, Propylenoxid, Butylenoxid, Isobutylenoxid sowie deren Gemische. Vorzugsweise eingesetzt werden Ethylen- und Propylenoxid sowie Gemische davon.

Die Alkylenoxide können einzeln oder in Form von sogenannten Blöcken und bei Verwendung von mehr als zwei verschiedenen Alkylenoxiden in jedem beliebigen Mischungsverhältnis als Mischblöcke angelagert werden. Darüber hinaus kann das Mischungsverhältnis der Alkylenoxide während der Dosierung sowohl diskontinuierlich als auch kontinuierlich während der Synthese variiert werden. Gegebenenfalls können nach erfolgter Aktivierung weitere OH-funktionelle Verbindungen parallel zum Alkylenoxid zudosiert werden, wie dies beispielsweise in DD 203734/735 beschrieben ist. Der Aufbau der Polyetherkette kann sich dabei nach dem Verwendungszweck der Polyetheralkohle richten. So ist es bevorzugt, bei Polyetheralkoholen, die für Polyurethan-Blockweichschaumstoffe eingesetzt werden sollen, am Kettenende einen Block anzulagern, der im wesentlichen, vorzugsweise vollständig, aus Propylenoxid besteht. Bei Polyetheralkoholen, die für Polyurethan-Formweichstoffe eingesetzt werden sollen, ist es bevorzugt, am Kettenende einen Block anzulagern, der im wesentlichen, vorzugsweise vollständig, aus Ethylenoxid besteht.

Mit Alkylenoxiden polymerisierbare, gesättigte Verbindungen können prinzipiell ebenfalls eingesetzt werden, soweit sie keine Funktionalitäten aufweisen, die den DMC-Katalysator hemmen oder vergiften. Derartige geeignete Verbindungen sind beispielsweise unsubstituierte oder substituierte, wie zum Beispiel Halogen-substituierte, C₅-C₁₂ - Olefinoxide, Oxetane, Lactone und/oder Anhydride wie z. B. Methyloxetane, Caprolacton, Maleinsäuranhydrid und/oder Phtalsäureanhydrid.

Die Umsetzung der Alkylenoxide kann bei den für die Herstellung von Polyetheralkoholen üblichen Bedingungen ablaufen, wie sie beispielsweise im Kunststoffhandbuch, Band 7 "Polyurethane", herausgegeben von Günter Oertel, Karl Hanser Verlag, München, 1993, 3. Auflage, Seite 63 bis 65, beschrieben sind. Vorzugsweise wird die Herstellung unter Schutzgasatmosphäre, insbesondere unter Stickstoff und/oder Argonatmosphäre durchgeführt.

Die Anlagerung von Aklylenoxiden an niedermolekulare OH-funktionelle Verbindungen und/oder H-funktionelle Verbindungen, insbesondere Alkohole mit 2 bis 8 Kohlenstoffatomen, findet vorzugsweise bei Drücken im Bereich von 1 bis 20, insbesondere von 2 bis 10 bar und Temperaturen im Bereich von 60 bis 140°C, insbesondere von 80 bis 130°C statt.

Das Anspringen der Reaktion wird durch Temperatur- und Druckanstieg angezeigt. Die Anspringzeit der Reaktion wird gemessen ab Zugabe der Reaktanden bis zu dem Zeitpunkt, an dem ein Temperaturmaximum oder Druckmaximum erreicht wird, wobei das zuerst eintretende Maximum, entweder ein Temperaturmaximum oder ein Druckmaximum, zur Bestimmung der Anspringzeit benutzt wird.

Im Rahmen der Erfindung können prinzipiell alle Arten von DMC-Katalysatoren, wie sie aus dem Stand der Technik bekannt sind, eingesetzt werden. Vorzugsweise werden Doppelmetallcyanidkatalysatoren der allgemeinen Formel (1) verwendet:

(1) M¹ₐ[M²(CN)_{b}(A)_{c}]_{d}·fM¹gXₙ ·h(H₂O)·eL,

wobei
M¹ ein Metallion, ausgewählt aus der Gruppe enthaltend Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺,
M², ein Metallion ausgewählt aus der Gruppe enthaltend Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺,
M¹ und M² gleich oder verschieden sind,
A ein Anion, ausgewählt aus der Gruppe enthaltend Halogenid, Hydroxid, Sulfat, Carbonat, Cyanid, Thiocyanat, Isocyanat, Cyanat, Carboxylat, Oxalat oder Nitrat,
X ein Anion, ausgewählt aus der Gruppe enthaltend Halogenid, Hydroxid, Sulfat, Carbonat, Cyanid, Thiocyanat, Isocyanat, Cyanat, Carboxylat, Oxalat oder Nitrat,
L ein mit Wasser mischbarer Ligand, ausgewählt aus der Gruppe enthaltend Alkohole, Aldehyde, Ketone, Ether, Polyether, Ester, Harnstoffe, Amide, Nitrile, Sulfide,
bedeuten und
a, b, c, d, g und n so ausgewählt sind, dass die Elektroneutralität der Verbindung gewährleistet ist
und
e die Koordinationszahl des Liganden, oder null
f eine gebrochene oder ganze Zahl größer oder gleich null
h eine gebrochene oder ganze Zahl größer oder gleich 0 bedeuten.

Derartige Verbindungen sind allgemein bekannt und können beispielsweise nach dem in EP-B1-0 862 947 beschriebenen Verfahren hergestellt werden, indem man die wäßrige Lösung eines wasserlöslichen Metallsalzes mit der wäßrigen Lösung einer Hexacyanometallatverbindung, insbesondere eines Salzes oder einer Säure, vereinigt und dazu, soweit erforderlich, während oder nach der Vereinigung einen wasserlöslichen Liganden gibt.

DMC-Katalysatoren werden zumeist als Feststoff hergestellt und als solcher eingesetzt. Typischerweise wird der Katalysator als Pulver oder in Suspension verwendet. Andere dem Fachmann bekannte Formen der Verwendung von Katalysatoren können jedoch ebenfalls angewendet werden. In einer bevorzugten Ausführungsform wird der DMC-Katalysator mit einem inerten oder nicht-inerten Suspendierungsmittel, wobei das Suspendierungsmittel beispielsweise auch das herzustellende Produkt oder ein Zwischenprodukt sein kann, durch geeignete Maßnahmen, wie z.B. Vermahlung, dispergiert. Die so hergestellte Suspension wird, gegebenenfalls nach Entfernen von störenden Wasseranteilen durch dem Fachmann bekannte Methoden, wie z.B. Strippen, mit oder ohne Einsatz von inerten Gasen, wie zum Beispiel Stickstoff und/oder Edelgasen, eingesetzt. Geeignete Suspendierungsmittel sind beispielsweise Toluol, Xylol, Tetrahydrofuran, Aceton, 2-Methylpentanon, Cyclohexanon sowie erfindungsgemäße Polyetheralkohole und Gemische davon. Vorzugsweise wird der Katalysator in einer Suspension in einem Polyol wie beispielsweise in EP-A-0 090 444 beschrieben eingesetzt.

In der erfindungsgemäßen Polyetheralkoholsynthese werden typischerweise 5 bis 1000 ppm, vorzugsweise 10 bis 500 ppm, DMC-Katalysator, jeweils bezogen auf die Masse des zu erwartenden Endprodukts, eingesetzt.

Ein Antioxidationsmittel im Rahmen der Erfindung ist eine oder mehrere Verbindungen, die geeignet für die Inhibierung der Autoxidation von Polyetheralkoholen ist (sind). Antioxidationsmittel im Rahmen der Erfindung sind deshalb Radikalfänger und/oder Peroxidzersetzer und/oder Metallionendesaktivatoren. Typischerweise sind dies Verbindungen, wie sie zur Erhöhung der Lagerstabilität von Polyetheralkoholen eingesetzt werden. Vorzugsweise ist das Antioxidationsmittel eine organische Verbindung. Die Antioxidationsmittel im Rahmen der Erfindung sind außerdem Verbindungen, die geeignet sind für die DMC-katalysierte Polyethersynthese. Geeignete Antioxidationsmittel im Rahmen der Erfindung sind eine oder mehrere Verbindungen ausgewählt aus der Gruppe der
(i) sterisch gehinderten Phenole und/oder
(ii) N,N-disubstiuierten Hydroxylamine und/oder
(iii) cyclischen Amine und/oder
(iv) Diarylamine und/oder
(v) organischen Phosphite und Phosphonite und/oder
(vi) N,N-substituierten Hydrazinverbindungen und Oxalsäureamidverbindungen und/oder
(vii) Lactone.

Verbindungen aus der Gruppe (i) sind zum Beispiel
(i)a Tocopherole:
   beispielsweise α-Tocopherol, β-Tocopherol, γ-Tocopherol, δ-Tocopherol und Gemische davon;
(i)b Phenole, die an mindestens zwei, vorzugsweise mindestens an der 2- und 4-Position des Phenolrings mit Alkylresten substituiert sind, wobei die Alkylreste linear, verzweigt kettig oder cyclisch sein können und vorzugsweise jeweils 1 bis 16 C-Atome aufweisen. Derartige Phenole sind zum Beispiel trialkylierte Monophenole, wie beispielsweise:
   2,6-Di-*tert*-butyl-4-methylphenol, 2-Butyl-4,6-dimethylphenol, 2,6-Di-*tert*-butyl-4-methoxyphenol, 2,6-Di-*tert*-butyl-4-ethylphenol, 2,6-Di-*tert*-butyl-4-n-butylphenol, 2,6-Di-*tert*-butyl-4-*iso*-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-*tert*-butyl-4-methoxymethylphenol, lineare oder in der Seitenkette verzweigte Nonylphenole, wie z.B. 2,6-Di-nonyl-4-methylphenol, 2,4-Dimethyl-6-(1'-methyl-undec-1'-yl)phenol, 2,4-Dimethyl-6-(1 '-methyl-heptadec-1'-yl)phenol, 2,4-Dimethyl-6-(1'-methyl-tridec-1'-yl)phenol und Gemische davon;
(i)c Alkylthioalkylphenole:
   beispielsweise 2,4-Di-octylthiomethyl-6-*tert*-butylphenol, 2,4-Di-octylthiomethyl-6-methyl-phenol, 2,4-Di-octylthiomethyl-6-ethylphenol, 2,6-Di-dodecylthiomethyl-4-nonylphenol und Gemische davon;
(i)d Thioether von Diphenolen, beispielsweise Verbindungen, bei denen die Phenoleinheiten jeweils an zwei oder drei Ringpositionen Alkylreste tragen, wobei die Alkylreste linear, verzweigt kettig oder cyclisch sein können und vorzugsweise jeweils 1 bis 16 C-Atome aufweisen, wie zum Beispiel: 2,2'-Thio-bis(6-*tert*-butyl-4-methylphenol), 2,2'-Thio-bis(4-octylphenol), 4,4'-Thio-bis(6-*tert*-butyl-3-methylphenol), 4,4'-Thio-bis(6-*tert*-butyl-2-methylphenol), 4,4'-Thio-bis(3,6-*di*-*sec*-amylphenol), 4,4'-Bis(2,6-dimethyl,4-hydroxyphenyl)disulfid und Gemische davon;
(i)e Alkylidenbisphenole, beispielsweise Verbindungen, bei denen die Phenoleinheiten jeweils an zwei oder drei Ringpositionen Alkylreste tragen, wobei die Alkylreste linear, verzweigt kettig oder cyclisch sein können und vorzugsweise jeweils 1 bis 16 C-Atome aufweisen und auch weitere Substituenten tragen können, wie beispielsweise 2,2'-Methylen-bis(6-*tert*-butyl-4-methylphenol), 2,2'-Methylen-bis(6-*tert*-butyl-4-ethylphenol), 2,2'-Methylen-bis(6-*tert*-butyl-4-butylphenol), 2,2'-Methylen-bis[4-methyl-6-(α-methylcyclohexyl)phenol)], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-*tert*-butylphenol), 2,2'-Ethyliden-bis(6-*tert*-butyl-4-isobutylphenol), 2,2'-Methylen-bis[6-(α-methylbenzyl)-4-nonylphenol), 2,2'-Methylen-bis[6-(a,a-dimethylbenzyl)-4-nonylphenol), 1,1-Bis(5-tert-butyl-4-hydroxy-2-methylphenyl)butan, 2,6-Bis(3-*tert*-butyl-5-methyl-2-hydroxy-benzyl)4-methylphenol, 1,1,3-Tris(5-*tert*-butyl-4-hydroxy-2-methylphenyl)butan, 1,1-Bis(5-*tert*-butyl-4-hydroxy-2-methylphenyl)-3-n-dodecylmercaptobutan, Ethylenglycol-bis-[3,3-bis(3 '-*tert*-butyl-4'-hydroxyphenyl)butyrat, Bis(3-*tert*-butyl-4-hydroxy-5-methylphenyl)dicyclopentadien, 1,1-Bis(3,5-dimethyl-2-hydroxyphenyl)butan, 2,2-Bis(3,5-di-*tert*-butyl-4-hydroxyphenyl)propan, 2,2-Bis(3,5-di-*tert*-butyl-4-hydroxy-2-methylphenyl)-4-n-dodecylmercaptobutan, 1,1,5,5-Tetra(5-*tert*-butyl-4-hydroxy-2-methylphenyl)pentan, sowie beispielsweise Methyl(3,5-di-*tert*-butyl-4-hydroxyphenyl)propionat, Octadecyl(3,5-di-*tert*-butyl-4-hydroxyphenyl)propionat, N,N'-Hexamediylen-bis-(3,5-di-*tert*-butyl-4-hydroxyhydrozimtsäure)amid, Tetrakis-[methylen-(3,5-di-*tert*-butyl-4-hydroxyhydrozimt-säure)]methan, 2,2'-Oxamido-bis[ethyl-3(3,5-di-*tert*-butyl-4-hydroxyphenyl]-propionat, Tris-(3,5-di-*tert*-butyl-4-hydroxybenzyl)isocyanurat und Gemische davon;

Verbindungen aus der Gruppe (ii) sind zum Beispiel:
N,N-Dibenzylhydroxylamin, N,N-Diethylhydroxylamin, N,N-Dioctylhydroxylamin, N,N-Dilauylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkyl-hydroxylamin aus hydrierten Talgfettaminen und Gemische davon.

Verbindungen aus der Gruppe (iii) sind zum Beispiel:
in Nachbarschaft zur Stickstofffunktionalität alkylierte cyclische, sekundäre Amine, wie zum Beispiel alkylierte Piperidine, wie beispielsweise 2,2,6,6-Tetramethylpiperidin, N-Methyl-2,2,6,6-tetramethylpiperidin, 4-Hydroxy-2,2,6,6-tetramethylpiperidin, Bis(2,2,6,6-tetra-methyl-4-piperidyl)sebacat, Bis(N-Methyl-2,2,6,6-tetramethyl-4-piperidyl)sebacat und Gemische davon und/oder

Verbindungen der Gruppe (iv) sind zum Beispiel:
Diphenylamine, Butyldiphenylamine, Octyldiphenylamine, N-Allyldiphenylamin, 4-Isopropoxy-N,N-diphenylamin, 4-Dimethyl-benzyl-N,N-diphenylamin, N-Phenyl-2-naphthylamin, N-Phenyl-1-naphthylamin und Gemische davon.

Verbindungen aus der Gruppe (v) sind zum Beispiel:
Alkyl- und/oder Arylphosphite und -phosphonate wie beispielsweise Triphenylphosphit, Diphenylalkylphosphite, Phenyldialkylphosphite, Tris(nonylphenyl)phosphit, Trilaurylphosphit, Trioctadecylphosphit, Tris(2,4-di-*tert*-butylphenyl)phosphit, Diisodecylpentaerythritdiphosphit, Bis(2,4-di-*tert-*butylphenyl)pentaerythritdiphosphit, Bis(2,6-di-*tert*-butyl-4-methyl-phenyl)pentaerythritdiphosphit, Bis-isodecyloxypentaerythritdiphosphit, Bis(2,4-di-tert-butyl-6-methylphenyl)pentaerythritdiphosphit, Bis(2,4,6-tri-*tert-*butylphenyl)pentaerythrit-diphosphit, Tri-stearylsorbittriphosphit, Tetrakis(2,4-di-*tert*-butylphenyl)-4,4'-biphenylendiphosphit, 6-Isooctyloxy-2,4,8,10-tetra-*tert-*butyl-12H-dibenz[d,g]-1,3,2-dioxaphosphocin, 6-Fluor-2,4,8,10-tetra-*tert*-butyl-12-methyl-dibenz[d,g]-1,3,2-dioxa-phosphocin, Bis(2,4-di-*tert*-butyl-6-methylphenyl)methylphosphit, Bis(2,4-di-*tert*-butyl-6-methylphenyl)ethylphosphit und Gemische davon.

Verbindungen aus der Gruppe (vi) sind zum Beispiel:
N,N'-substituierte oder disubstituierte Hydrazinderivate, arylierte Oxalsäurediamide und/oder arylierte Salicylderivate, wie beispielsweise:
   N,N'-Diphenyloxalsäurediamid, N-Salicylal-N'-salicyloylhydrazin, N,N'-Bis(salicyloyl)-hydrazin, N,N'-Bis(3,5-di-*tert*-butyl-4-hydroxyphenylpropionyl)hydrazin, 3-Salicyloylamino-1,2,4-triazol, Bis(benzyliden)oxalsäuredihydrazid, Oxanilid, Isophthalsäure-dihydrazid, Sebacinsäure-bis-phenylhydrazid, N,N'-Diacetyl-adipinsäuredihydrazid, N,N'-Bis-salicyloyloxalsäuredihydrazid, N,N'-Bis-salicyloyl-thiopropionsäure-dihydrazid und Gemische davon.

Verbindungen aus der Gruppe (vii) sind z.B. die Benzofuranone, wie sie in EP-A1-1 291 384 oder EP-B1-0 644 190 beschrieben sind.

Das Antioxidationsmittel kann auf einmal oder stufenweise eingesetzt werden. Ebenso ist es möglich mehrere Antioxidationsmittel einzeln, stufenweise oder auf einmal einzusetzen. Ebenso geeignet ist ein Antioxidationsmittel, das Gemische von Verbindungen innerhalb einer der Gruppen (i) bis (viii) als auch von Gemische von Verbindungen jeweils verschiedener Gruppen aufweist.

Bevorzugt sind Antioxidationsmittel, die im Aufarbeitungsprozess einfach abzutrennen sind und/oder für die Polyurethansynthese geeignet sind, weshalb sie im Polyetheralkohol verbleiben können und das Verfahren ohne Aufarbeitungsschritt zur Entfernung des Antioxidationsmittels durchgeführt werden kann.

Die Zugabe des Antioxidationsmittels erfolgt vor der Umsetzung der DMC-katalysierten Umsetzung der Alkylenoxide mit der oder den OH-Verbindungen. Vorzugsweise erfolgt die Zugabe, bevor Verfahrensschritte durchgeführt werden, bei denen eine thermische Belastung von mehr als 50°C - sowohl durch externes Erhitzen als auch durch freiwerdende Wärme - auftreten kann; insbesondere sind dies: die Zugabe von Alkylenoxid und die Umsetzung von Alkylenoxid mit OH-Verbindung. Die Zugabe von Antioxidationsmittel erfolgt unmittelbar vor dem Einbringen der OH-Verbindung.

Das Antioxidationsmittel kann in einer Menge von 10 bis 4000 ppm je Verbindung, vorzugsweise von 20 bis 3000 ppm je Verbindung, bezogen auf die herzustellende Polyetheralkoholmasse, eingesetzt werden. Das Antioxidationsmittel wird insgesamt in einer größeren Menge als DMC-Katalysator eingesetzt, wobei sich "Menge" auf die Masse des Katalysators bezieht. Bevorzugt ist ein Massenverhältnis von Antioxidationsmittel zu DMC-Katalysator von größer 1, bezogen auf die Masse des eingesetzten Katalysators. Bevorzugt ist die Verwendung von mindestens der 1,5-fachen, noch mehr bevorzugt ist die Verwendung einer 1,5- bis 1000-fachen, am meisten bevorzugt die Verwendung einer 2- bis 500-fachen Menge an Antioxidationsmittel, bezogen auf die Masse an eingesetzten Katalysator.

Gegebenenfalls können zur Lagerung und weiteren Verarbeitung der Produkte weitere und/oder andere Antioxidationsmittel in den üblichen, dem Fachmann bekannten Mengen zugegeben werden.

Die erfindungsgemäß hergestellten Polyetheralkohole können vorzugsweise zur Herstellung von Polyurethanen, zum Beispiel in Form von Hart- oder Weichschaumstoffe, Vergußmassen, Coatings oder Vernetzer verwendet werden. Die Herstellung der Polyurethane kann nach an sich bekannten Verfahren durch Umsetzung der Polyetheralkohole mit Isocyanaten oder Polyisocyanaten erfolgen, wie beispielsweise in Kunststoff-Handbuch, Band VII, "Polyurethane", 3. Auflage, 1993, herausgegeben von Dr. G. Oertel (Carl Hanser Verlag München), beschrieben. Je nach den angestrebten Eigenschaften der Polyurethane ist es möglich, die erfindungsgemäßen Polyetheralkohole allein oder gemeinsam mit anderen Verbindungen mit mindestens zwei mit Isocyanatgruppen reaktiven Wasserstoffatomen einzusetzen. Als Verbindung mit mindestens zwei mit Isocyanatgruppen reaktiven Wasserstoffatomen, die gemeinsam mit den erfindungsgemäßen Polyetheralkoholen mit Polyisocyanaten eingesetzt werden können, gehören Polyesteralkohole sowie gegebenenfalls bi- oder mehrfunktionelle Alkohole und Amine mit einem Molekulargewicht im Bereich zwischen 62 und 1000 g/mol, sogenannte Kettenverlängerer- und Vernetzer. Weiterhin können Katalysatoren, Treibmittel sowie die üblichen Hilfsmittel und/oder Zusatzstoffe eingesetzt werden.

Die Erfindung soll an den nachstehenden Beispielen näher verdeutlicht werden.

### Beispiele

### Beispiel 1 (Vergleichsbeispiel):

10 g eines Polypropylenglycols mit einem Molekulargewicht (Mw) von 400 g/mol, im Folgenden PPG 400 genannt, wurden 0,03 g eines DMC-Katalysators (entsprechend 150 ppm), hergestellt nach Beispiel 1 von EP-B1-0 862 947, zugesetzt und 5 Minuten mit einem Dispergiergerät Typ Ultra-Turrax T25 der Firma IKA zu einem Konzentrat dispergiert. Weitere 120 g PPG 400 wurden zugesetzt und nochmals mit Ultra-Turrax 5 Minuten lang homogenisiert. Danach wurde dieses PPG 400/DMC-Gemisch in einem Rührautoklaven 2 Stunden bei 100°C und bei 3 mbar evakuiert. Anschließend wurden bei 130°C 70 g Propylenoxid zudosiert. Nach dem Anstieg von Temperatur und Druck wurden die Maxima erfasst und hieraus die Anspringzeit der Reaktion entnommen, die zugleich als Wertung für die katalytische Aktivität dient. Als Zeitpunkt zur Bestimmung der Anspringzeit wurde der Zeitpunkt gewählt, bei dem ein erstes Maximum (entweder der Temperatur oder des Druckes) erreicht wurde. Nach dem vollständigen Abreagieren des Propylenoxids, erkennbar an dem Absinken des Drucks auf ein konstantes Niveau, wurde der Polyetheralkohol nach einer Inertisierung mit Stickstoff aus dem Autoklaven abgelassen und analysiert.

### Beispiel 2:

Durchführung wie in Beispiel 1, außer dass dem Reaktionsgemisch unmittelbar nach der Evakuierungsphase 0,2 g (1000 ppm) (2,6-Di-tert-butyl-4-methylphenol, BHT) zugesetzt wurde.

### Beispiel 3:

Durchführung wie Beispiel 1, außer dass dem Reaktionsgemisch vor der Evakuierungsphase 0,2 g (1000 ppm) BHT zugesetzt wurde.

### Beispiel 4:

Durchführung wie Beispiel 1, außer dass dem Reaktionsgemisch nach der Evakuierungsphase 0,2 g (1000 ppm) α-Tocopherol zugesetzt wurde.

### Beispiel 5:

Durchführung wie Beispiel 1, außer dass dem Reaktionsgemisch nach der Evakuierungsphase 0,1 g (500 ppm) N,N-Dihexadecylhydroxylamin zugesetzt wurde.

### Beispiel 6:

Durchführung wie Beispiel 1, außer dass dem Reaktionsgemisch nach der Evakuierungsphase 0,1 g (500 ppm) Triphenylphophit zugesetzt wurde.

### Beispiel 7:

Durchführung wie Beispiel 1, außer dass dem Reaktionsgemisch nach der Evakuierungsphase 0,5 g (2000 ppm) N, N-Diphenyloxalsäurediamid zugesetzt wurde.

### Beispiel 8 (Vergleichsbeispiel):

Durchführung wie Beispiel 1, außer dass die Reaktion mit 0,005 g (25 ppm) DMC-Katalysator durchgeführt wurde.

### Beispiel 9:

Durchführung wie Beispiel 8, außer dass dem Reaktionsgemisch unmittelbar nach der Evakuierungsphase 0,05 g (250 ppm) BHT zugesetzt wurde.

### Beispiel 10:

Durchführung wie Beispiel 8, außer dass dem Reaktionsgemisch vor der Evakuierungsphase 0,05g ( 250 ppm) BHT zugesetzt wurde.

### Beispiel 11:

Durchführung wie Beispiel 8, außer dass dem Reaktionsgemisch unmittelbar nach der Evakuierungsphase 0,01 g (50 ppm) BHT zugesetzt wurde.

### Beispiel 12 (Vergleichsbeispiel):

3200 g eines Glycerin-Propoxylat mit einer mittleren Molmasse von ca. 1000 g/mol wurden in einem 20 1 - Rührkesselreaktor mit 11 g einer 5,53 %igen DMC-Katalysatorsuspension versetzt und bei 120°C und einem Vakuum von ca. 40 mbar entwässert, bis der Wassergehalt unter 0,02% lag. Anschließend wurden ca. 400g Propylenoxid zudosiert und das Anspringen der Reaktion abgewartet, was nach 21 min an einer kurzzeitigen Temperaturerhöhung und einem schnellen Abfallen des Reaktordrucks erkennbar war. Nachfolgend wurden bei gleicher Temperatur 16450 g eines Gemisches aus 14910 g Propylenoxid und 1940 g Ethylenoxid in einem Zeitraum von ca. 2,5 Stunden zudosiert. Nach Erreichen eines konstanten Reaktordruckes wurden nicht umgesetzte Monomere und andere flüchtige Bestandteile in Vakuum abdestilliert und das Produkt abgelassen. Der erhaltene, farblose Polyetheralkohol besaß folgende Kennwerte: OH-Zahl: 49,4 mg KOH/g, Säurezahl 0,053 mg KOH/g, Wassergehalt 0,011%, Viskosität (25°C): 716 mPas, Mw: 4704 g/mol, D: 1,381.

### Beispiel 13:

Durchführung wie Beispiel 12, außer dass dem Reaktionsgemisch nach der Inertisierung 10 g BHT (500 ppm, bezogen auf die Endmenge) zugesetzt wurden. Der Reaktionsbeginn war bereits nach 3 min zu registrieren. Der erhaltene, farblose Polyetheralkohol besaß folgende Kennwerte: Hydroxylzahl (OH-Zahl): 48,2 mg KOH/g, Säurezahl: 0,027 mg KOH/g, Wassergehalt: 0,009%, Viskosität (25°C): 543 mPas, Molekulargewicht (M_{w}) 3844 g/mol, Dichte (D): 1,101.

Die Ergebnisse der Beispiele 1 bis 11 sind gezeigt in Tabelle 1.

**Tabelle 1:**

| Beispiel | DMC-Menge [ppm] | Stabilisator | Menge [ppm] | Anspringzeit (min) |
|---|---|---|---|---|
| 1 | 150 | - | - | 14 |
| 2 | 150 | BHT | 1000 | 4 |
| 3 | 150 | BHT | 1000 | 5 |
| 4 | 150 | Alpha-Tocopherol | 1000 | 5 |
| 5 | 150 | Dihexadecylhydroxylamin | 500 | 7 |
| 6 | 150 | Triphenylphosphit | 500 | 4 |
| 7 | 150 | Diphenyloxalsäurediamid | 2000 | 2 |
| 8 | 25 | - | - | 27 |
| 9 | 25 | BHT | 250 | 6 |
| 10 | 25 | BHT | 250 | 5 |
| 11 | 25 | BHT | 50 | 10 |

## Patentansprüche

1. Verfahren zur Herstellung von Polyetheralkoholen durch Reaktion von gesättigten Alkylenoxiden mit mindestens einer gesättigten OH-Verbindung oder einem bereits mit der gesättigten OH-Verbindung oligo- oder polymerisierten Alkylenoxid im Beisein eines Doppelmetallcyanid(DMC)-Katalysators, wobei ein Antioxidationsmittel vor der Reaktion zugegeben wird, wobei mehr Antioxidationsmittel als DMC Katalysator (bezogen auf die Masse an eingesetztem DMC-Katalysator) verwendet wird, **dadurch gekennzeichnet, dass** das Antioxidationsmittel unmittelbar vor der Zugabe von Alkylenoxid zugegeben wird.

2. Verfahren nach Anspruch 1, wobei das Antioxidationsmittel insgesamt in mindestens 1,5-facher Menge bezogen auf die Masse an eingesetztem DMC-Katalysator verwendet wird.

3. Verfahren nach Anspruch 1 oder 2, wobei das Antioxidationsmittel ausgewählt wird aus der Gruppe der sterisch gehinderten Phenole, der N,N- disubstituierten Hydroxylamine, der sterisch gehinderten sekundären zyklischen Amine, der Diarylamine, der organischen Phosphonsäurederivate, der N,N-substituierten Hydrazinverbindungen, der Oxalsäureamidverbindungen, der Benzofurane und der Lactone.

4. Verfahren nach einem der Ansprüche 1 bis 3, wobei das Antioxidationsmittel in einer Konzentration von 7 bis 4000 ppm, bezogen auf die herzustellende Polyetheralkoholmasse, verwendet wird.

5. Verfahren nach einem der Ansprüche 1 bis 4, wobei die Menge an Döppelmetallcyanid-Katalysator 5 bis 1000 ppm, bezogen auf die Masse des herzustellenden Polyetheralkohols, beträgt.

6. Verfahren nach einem der Ansprüche 1 bis 5, wobei Polyetheralkohole, die eine Hydroxylzahl von 10 bis 350 mg KOH/g aufweisen, erhalten werden.

7. Verfahren nach einem der Ansprüche 1 bis 6, wobei Polyetheralkohole, die eine OH-Funktionalität von 1 bis 8 aufweisen, erhalten werden.

8. Verfahren zur Herstellung von Polyurethanen, welches die folgenden Schritte aufweist:
A) Herstellung von Polyetheralkoholen nach einem Verfahren gemäß einem der Ansprüche 1 bis 7,
B) Umsetzung der Polyetheralkohole aus Schritt A) mit Isocyanaten und/oder Polyisocyanaten zu Polyurethanen.

## Claims

1. A process for preparing polyether alcohols by reacting saturated alkylene oxides with at least one saturated OH compound, or an alkylene oxide which has previously been oligomerized or polymerized with the saturated OH compound, in the presence of a double metal cyanide (DMC) catalyst, wherein an antioxidant is added before the reaction, using more antioxidant than DMC catalyst (based on the mass of DMC catalyst used), wherein the antioxidant is added immediately before the addition of alkylene oxide.

2. The process according to claim 1, wherein the antioxidant is used in a total amount which is at least 1.5 times the mass of DMC catalyst used.

3. The process according to claim 1 or 2, wherein the antioxidant is selected from the group consisting of sterically hindered phenols, N,N-disubstituted hydroxylamines, sterically hindered secondary cyclic amines, diarylamines, organic phosphonic acid derivatives, N,N-substituted hydrazine compounds, oxamide compounds, benzofurans and lactones.

4. The process according to any of claims 1 to 3, wherein the antioxidant is used in a concentration of from 7 to 4000 ppm, based on the mass of polyether alcohol to be prepared.

5. The process according to any of claims 1 to 4, wherein the amount of double metal cyanide catalyst is from 5 to 1000 ppm, based on the mass of the polyether alcohol to be prepared.

6. The process according to any of claims 1 to 5, wherein polyether alcohols having a hydroxyl number of from 10 to 350 mg KOH/g are obtained.

7. The process according to any of claims 1 to 6, wherein polyether alcohols having an OH functionality of from 1 to 8 are obtained.

8. A process for producing polyurethanes, which comprises the following steps:
A) preparation of polyether alcohols by a process according to any of claims 1 to 7,
B) reaction of the polyether alcohols from step A) with isocyanates and/or polyisocyanates to form polyurethanes.

## Revendications

1. Procédé de production de polyétheralcools par réaction d'oxydes d'alkylène saturés avec au moins un composé OH saturé ou un oxyde d'alkylène déjà oligo- ou polymérisé avec le composé OH saturé, en présence d'un catalyseur de cyanure bimétallique (DMC), où on ajoute avant la réaction un agent antioxydant, où l'on utilise davantage d'agent antioxydant que de catalyseur DMC (par rapport à la masse de catalyseur DMC mise en oeuvre), **caractérisé en ce que** l'agent antioxydant est ajouté immédiatement avant l'adition d'oxyde d'alkylène.

2. Procédé suivant la revendication 1, dans lequel l'agent antioxydant est utilisé, au total, en au moins une quantité de 1,5 fois par rapport à la masse du catalyseur DMC mise en oeuvre.

3. Procédé suivant la revendication 1 ou 2, dans lequel l'agent antioxydant est choisi dans le groupe formé par les phénols à encombrement stérique, les hydroxylamines N,N-disubstituées, les amines cycliques secondaires à encombrement stérique, les diarylamines, les dérivés organiques d'acides phosphoniques, les composés d'hydrazine N,N-substitués, les composés d'amide d'acide oxalique, les benzofurannes et les lactones.

4. Procédé suivant l'une quelconque des revendications 1 à 3, dans lequel l'agent antioxydant est utilisé en une concentration de 7 à 4000 ppm, par rapport à la masse de polyétheralcool à préparer.

5. Procédé suivant l'une quelconque des revendications 1 à 4, dans lequel la quantité de catalyseur de cyanure bimétallique est de 5 à 1000 ppm, par rapport à la masse du polyétheralcool à préparer.

6. Procédé suivant l'une quelconque des revendications 1 à 5, dans lequel on obtient des polyétheralcools présentant un indice hydroxyle de 10 à 350 mg de KOH/g.

7. Procédé suivant l'une quelconque des revendications 1 à 6, dans lequel on obtient des polyétheralcools présentant une fonctionnalité OH de 1 à 8.

8. Procédé de préparation de polyuréthannes, présentant les étapes suivantes :
A) Préparation de polyétheralcools par un procédé suivant l'une quelconque des revendications 1 à 7,
B) Réaction des polyétheralcools de l'étape A) avec des isocyanates et / ou des polyisocyanates pour former des polyuréthannes.
